# EUROPÄISCHE PATENTSCHRIFT

(11) **EP 1 185 456 B1**
(45) Veröffentlichungstag und Bekanntmachung des Hinweises auf die Patenterteilung: **04.02.2004**
(21) Anmeldenummer: 00936856.4
(22) Anmeldetag: 03.06.2000
(51) Int. Cl.: B64C 27/72, F15B 15/26, F15B 11/20, F16D 1/112, B66F 3/30, B66F 3/46

(54) **EINRICHTUNG ZUM GLEICHZEITIGEN VERRIEGELN MEHRERER AKTUATOREN**
DEVICE FOR SIMULTANEOUSLY INTERLOCKING A PLURALITY OF ACTUATORS
DISPOSITIF PERMETTANT LE VERROUILLAGE SIMULTANE DE PLUSIEURS ACTIONNEURS

(30) Priorität: 10.06.1999 DE 19926429
(43) Veröffentlichungstag der Anmeldung: 13.03.2002
(73) Patentinhaber: ZF Luftfahrttechnik GmbH, 34379 Calden (DE)
(72) Erfinder: SCHREIBER, Thomas, D-81735 München (DE); RÖHN, Torsten, D-34587 Felsberg (DE)
(74) Vertreter: Zietlow, Karl-Peter
(86) Internationale Anmeldenummer: PCT/EP2000/005070
(87) Internationale Veröffentlichungsnummer: WO 2000/076844

(56) Entgegenhaltungen:
- EP-A- 0 729 883
- EP-A- 0 890 727
- DE-A- 19 627 869
- GB-A- 760 646
- US-A- 4 976 336
- US-A- 5 685 141
- RICHTER P ET AL: "DESIGN AND FIRST TESTS OF INDIVIDUAL BLADE CONTROL ACTUATORS" PROCEEDINGS OF THE EUROPEAN ROTORCRAFT AND POWERED LIFT AIRCRAFT FORUM,GB,LONDON, RAS, Bd. FORUM 16, 18. September 1990 (1990-09-18), Seiten 6301-6309, XP002044595
- PATENT ABSTRACTS OF JAPAN vol. 018, no. 682 (M-1729), 22. Dezember 1994 (1994-12-22) & JP 06 270894 A (MITSUBISHI HEAVY IND LTD), 27. September 1994 (1994-09-27)

## Beschreibung

Die Erfindung betrifft eine Einrichtung zum gleichzeitigen Verriegeln mehrerer Aktuatoren mit den Merkmalen nach dem Oberbegriff von Anspruch 1.

Solch eine Einrichtung set aus der EP 0 810 727 A1 bekannt.

In vielen Fällen der Regelungstechnik werden Aktuatoren angewendet, die beim Ausfallen oder Abschalten der Energieversorgung in eine sichere Position gebracht und dort verriegelt werden. Es ist bekannt, Götte, H.J.: "Einzelblattsteuerung beim Hubschrauber durch servohydraulische Aktuatoren im Rotorkopf", 11. Aachener fluidtechnisches Kolloquium, Fachgebiet Hydraulik, Aachen 1994, bei Hubschraubern mit Aktuatoren zur individuellen Ansteuerung der Rotorblätter Sicherungskolben vorzusehen, die bei Energieausfall einen Aktuatorkolben in eine sichere Position zurückführen und ihn dort halten. Zu diesem Zweck besitzen die Sicherungskolben ein konisch geformtes Ende, das in eine keilförmige Ringnut des Aktuatorkolbens eingreift. Der Aktuator wird hydraulisch betätigt, wobei der Hydraulikdruck auf die konischen Enden der Sicherungskolben wirkt und diese entgegen der Kraft einer Feder in eine Freigangposition für den Aktuatorkolben schiebt. Fällt der Hydraulikdruck aus, schieben die Federn, die als Gasspeicherfedern ausgebildet sein können, die Sicherungskolben in die keilförmige Nut zurück und verriegeln den Stellkolben spielfrei.

Für jeden Aktuator ist eine separate Verriegelungseinrichtung mit Betätigungsmechanismus vorgesehen. Beim Abschalten oder Ausfall der Energieversorgung müssen alle Verriegelungseinrichtungen gleichzeitig betätigt und alle Aktuatoren verriegelt werden. Dies ist besonders aufwendig, wenn die Aktuatoren oder die Verriegelungseinrichtung nicht hydraulisch, sondern elektrisch betätigt werden. Durch die Vielzahl der erforderlichen Bauteile erhöhen sich das Sicherheitsrisiko, der Bauaufwand und das Gewicht.

Der Erfindung liegt die Aufgabe zugrunde, eine Einrichtung zum gleichzeitigen Verriegeln mehrerer Aktuatoren zu schaffen, die auch für die Anwendung bei elektrisch oder elektromagnetisch betätigten Aktuatoren geeignet ist, sowie relativ wenig Energie und Bauraum beansprucht. Diese Aufgabe wird gemäß der Erfindung durch die Merkmale des Anspruchs 1 gelöst. Weitere Ausgestaltungen ergeben sich aus den Unteransprüchen.

Nach der Erfindung sind mehrere zweite Riegelelemente miteinander verbunden. Sie werden durch eine gemeinsame Vorrichtung betätigt. Je nach der Anzahl der miteinander verbundenen Riegelelemente entfallen entsprechend viele Betätigungsvorrichtungen, so daß die Anzahl der erforderlichen Bauteile stark reduziert ist. Dadurch verringert sich gleichzeitig das Sicherheitsrisiko, was bei Hubschrauberanwendungen eine große Bedeutung hat. Außerdem verringert sich das Gewicht und der Bauaufwand.

Die Verbindung der zweiten Riegelelemente untereinander gestaltet sich besonders einfach, wenn alle Riegelelemente in einer Ebene angeordnet sind. Diese Ebene kann eine Längsebene oder eine Querebene sein. Zweckmäßigerweise werden die ersten Riegelelemente und/oder die Aktuatoren jeweils in einer gleichen Ebene angeordnet, so daß über Obertragungselemente zum Überbrücken der Abstände unterschiedlicher Ebenen vermieden werden.

Besonders vorteilhaft ist die Anwendung der erfindungsgemäßen Einrichtung bei Hubschraubern. Hier spielen das Sicherheitsrisiko, das Gewicht und die Massen im rotierenden System eine entscheidende Rolle. Außerdem werden zur individuellen Ansteuerung der Rotorblätter in der Regel mehrere Aktuatoren im rotierenden System benötigt, die bei Ausfall der Energieversorgung gleichzeitig in eine sichere Position gebracht und verriegelt werden müssen, um den Hubschrauber mechanisch sicher navigieren zu können. Zweckmäßigerweise wirken die Aktuatoren über einen Mischhebel auf das Ansteuersystem der Rotorblätter. Die Mischhebel sind im Rotormast untergebracht und besitzen drei Anlenkachsen, nämlich eine für den Aktuator, eine für das Steuergestänge der mechanischen Ansteuerung und eine für eine zu einem Blatthorn führende Steuerstange.

Die ersten Riegelelemente sind in vorteilhafter Weise im Bereich der Anlenkachse des Aktuators am Mischhebel angeordnet und mit diesem verbunden. Wird das erste Riegelelement durch das zweite Riegelelement verriegelt, ist die individuelle Ansteuerung der Rotorblätter vom Aktuator blockiert. Es wirkt dann nur die mechanische Ansteuerung. Hierbei sind die ersten und zweiten Riegelelemente zweckmäßigerweise in einer Rotationsebene des Rotormastes angeordnet, wobei die zweiten Riegelelemente über einen Verriegelungsring oder ein sternförmiges Element miteinander verbunden sein können. Die miteinander verbundenen zweiten Riegelelemente können gemäß einer Ausgestaltung der Erfindung durch keilförmige Ausnehmungen des Verriegelungringes gebildet werden, in die die ersten Riegelelemente beim Verstellen des Verriegelungsrings oder des sternförmigen Elements eingreifen. Zum Entriegeln wird der Verriegelungsring oder das sternförmige Element durch eine Hilfskraft entgegen der Kraft einer Feder in eine Entriegelungsposition gedreht, in der das erste Riegelelement in Stellrichtung des Aktuators zumindest in vorgegebenen Grenzen frei beweglich ist. Beim Abschalten oder bei Ausfall der Energie dreht die vorgespannte Feder den Verriegelungsring bzw. das sternförmige Element in die Verriegelungsposition zurück, so daß die ersten Riegelelemente in einer sicheren Position verriegelt werden. Anstelle der Drehbewegung des Verriegelungsrings bzw. des sternförmigen Elements ist es auch möglich, daß der Verriegelungsring bzw. das Verbindungsteil der zweiten Riegelelemente eine axiale Bewegung zur Verriegelung der ersten Riegelelemente ausführt, wenn die Riegelelemente entsprechend ausgebildet oder angeordnet sind.

Spiel- und Lagetoleranzen können bei Anordnung von mehreren Aktuatoren an einem Verriegelungsring zu Problemen führen. Diese können auf zuverlässige Weise dadurch ausgeglichen werden, daß entweder die ersten oder die zweiten Riegelelemente federnd nachgiebig ausgebildet und in sich vorgespannt sind. Hierdurch wird ein Verklemmen beim Verriegeln ausgeschlossen und im verriegelten Zustand Spielfreiheit gewährleistet.

In der Beschreibung und in den Ansprüchen sind zahlreiche Merkmale im Zusammenhang dargestellt und beschrieben. Der Fachmann wird die kombinierten Merkmale zweckmäßigerweise im Sinne der zu lösenden Aufgaben auch einzeln betrachten und zu sinnvollen weiteren Kombinationen zusammenfassen.

In der Zeichnung ist ein Ausführungsbeispiel der Erfindung dargestellt.
Es zeigt:

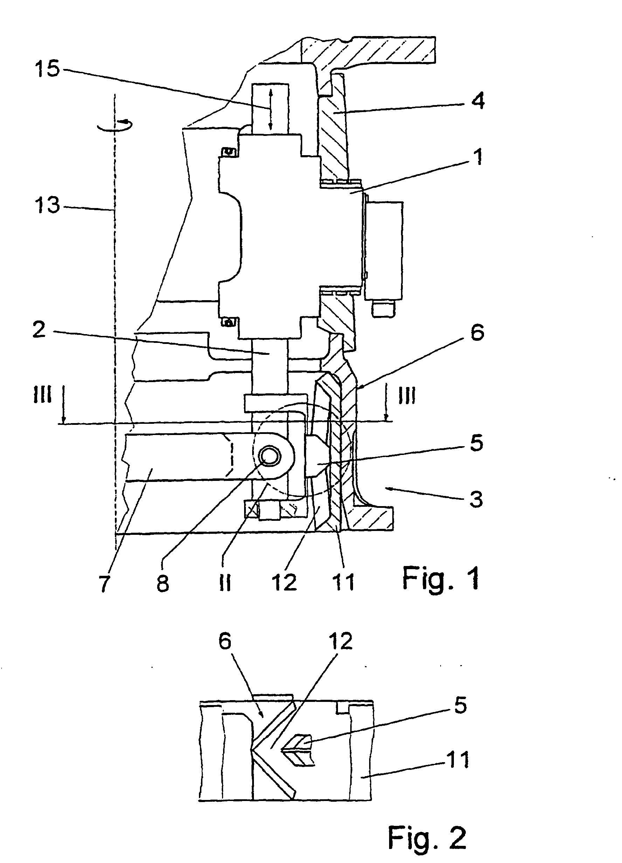

- Fig. 1: einen schematischen Teillängsschnitt durch einen Rotormast eines Hubschraubers,
- Fig. 2: eine Abwicklung eines Verriegelungsrings im Bereich II in Fig. 1,

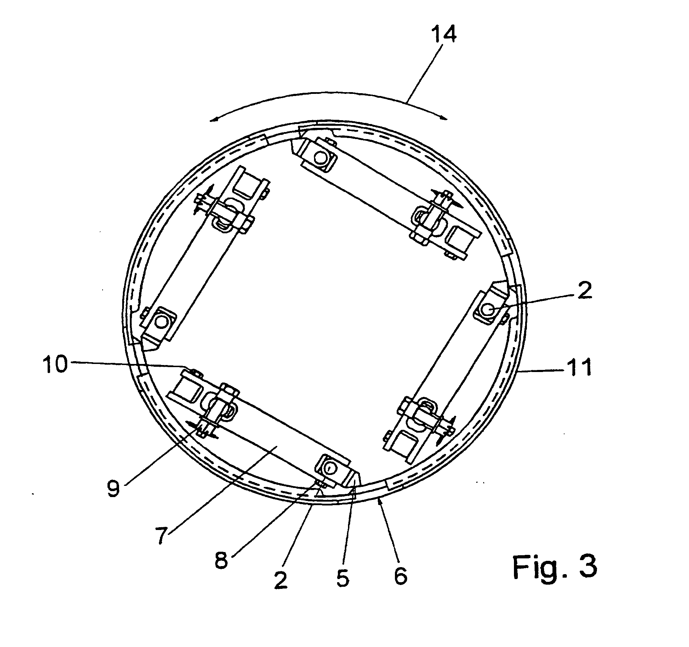

- Fig. 3: einen Schnitt durch den Verriegelungsmechanismus entsprechend der Linie III-III in Fig. 1 und
- Fig. 4: einen Teilschnitt einer Ausgestaltung eines Riegelelements und
- Fig. 5: eine Draufsicht der Ausgestaltung eines Riegelelements nach Fig. 4.

In einem um eine Rotationsachse 13 drehbaren Rotormast 4 eines Hubschraubers sind in einer Rotationsebene auf den Umfang verteilt vier Mischhebel 7 mit Anlenkachsen 8, 9, 10 vorgesehen. An der Anlenkachse 8 greift als Stellglied eines Aktuators 1 eine Kolbenstange 2 an, während an der Anlenkachse 10 am anderen Ende des Mischhebels 7 ein nicht näher dargestelltes mechanisches Steuergestänge zur Navigation des Hubschraubers angreift. Die Stellsignale des Aktuators 1 und des mechanischen Steuergestänges werden über eine Steuerstange auf das zugeordnete Rotorblatt des Hubschraubers übertragen. Die Steuerstange greift an der dritten Anlenkachse 9 des Mischhebels 7 an.

Eine Einrichtung 3 zum gleichzeitigen Verriegeln der Aktuatoren 1 enthält erste Riegelelemente 5 und zweite Riegelelemente 6. Im Bereich der Anlenkachse 8 ist das erste Riegelelement 5 mit dem Mischhebel 7 fest verbunden. Es greift in das zweite Riegelelement 6, das in einer Stellrichtung 15 des Aktuators 1 im Rotormast 4 fixiert ist. Das zweite Riegelelement 6 besteht aus einer keilförmigen Ausnehmung 12 eines Verriegelungsrings 11, in die das erste Riegelelement 5 eingreift. Durch die Keilform wird es zentriert und am Ende der Stellbewegung in Verriegelungsrichtung zwischen den Keilflächen spielfrei verriegelt.

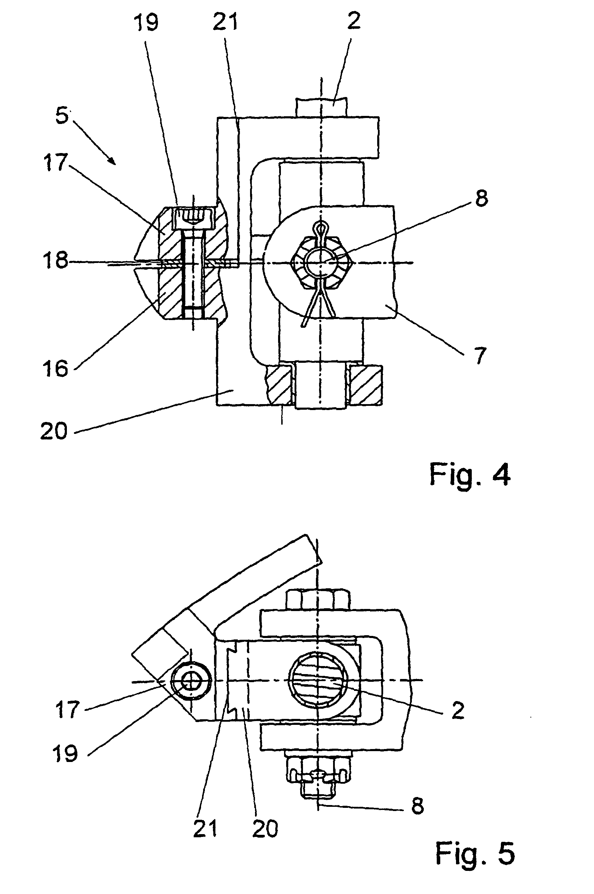

Aus den Fig. 4 und 5 ist ersichtlich, daß das erste Riegelelement ein erstes Keilelement 16 und ein zweites Keilelement 17 aufweist. Das erste Keilelement ist über die Klaue 20 an der Anlenkachse 8 bezüglich der Stellbewegungsrichtung der Kolbenstange 2 an den Mischhebel 7 gekoppelt. Das zweite Keilelement 17 ist entlang einer Schwalbenschwanz-Führung 21 gegenüber dem ersten Keilelement 16 verschiebbar.
Zwischen den Keilelementen 16, 17 ist eine Tellerfeder 18 angeordnet, welche mittels der Schraube 19 vorgespannt ist. Übersteigt die auf die Tellerfeder 18 wirkende Druckkraft die von der Schraube 19 erzeugte Vorspannkraft z. B. beim Verriegeln, nähert sich das verschiebbare zweite Keilelement 17 dem feststehenden ersten Keilelement 16.
Insgesamt ist das in sich vorgespannte Keilelement 5 hierdurch federnd nachgiebig, wenn die Vorspannkraft überschritten wird.
Im verriegelten Zustand werden Spiel- und Lagetoleranzen zwischen den ersten und zweiten Riegelelementen 5, 6 durch die federnde Ausgestaltung ausgeglichen. Durch diese Ausgestaltung wird auch bei unterschiedlichen Eingriffspositionen eine vollständige Verriegelung aller Aktuatoren sichergestellt.
Der selbe Effekt ist erzielbar, wenn anstelle der ersten Keilelemente 5 die zweiten Keilelemente 6 federnd nachgiebig ausgebildet sind.

Der Verriegelungsring 11 ist in Stellrichtung 14 um einen gegebenen Drehwinkel verdrehbar. Zum Entriegeln des Aktuators 1 wird er mittels einer Hilfskraft entgegen der Kraft einer Feder in die Entriegelungsposition gebracht, in der das erste Riegelelement 5 sich zumindest in einem begrenzten Umfang in Stellrichtung 15 des Aktuators 1 frei bewegen kann. Wird die Energieversorgung abgeschaltet oder fällt sie aus, wird der Verriegelungsring 11 durch die Federkraft in die Verriegelungsposition zurückgedreht, in der das erste Riegelelement 5 an den Flanken der keilförmigen Ausnehmung 12 spielfrei anliegt und somit mit der angekoppelten Kolbenstange 2 in Stellrichtung 15 blockiert ist.

### Bezugszeichen

- 1: Aktuator
- 2: Kolbenstange
- 3: Einrichtung
- 4: Rotormast
- 5: erstes Riegelelement
- 6: zweites Riegelelement
- 7: Mischhebel
- 8: Anlenkachse
- 9: Anlenkachse
- 10: Anlenkachse
- 11: Verriegelungsring
- 12: Ausnehmung
- 13: Rotationsachse
- 14: Stellrichtung
- 15: Stellrichtung
- 16: Keilelement
- 17: Keilelement
- 18: Tellerfeder
- 19: Schraube
- 20: Klaue
- 21: Schwalbenschwanz-Führung

## Patentansprüche

1. Einrichtung (3) zum gleichzeitigen Verriegeln mehrerer Aktuatoren (1) mit einem jedem Stellglied (2) eines Aktuators (1) zugeordneten ersten Riegelelement (5), das mit einem zweiten Riegelelement (6) zusammenwirkt, das in Stellrichtung des Stellglieds (2) im Gehäuse (4) fixiert ist, ferner durch Federkraft in eine Verriegelungsposition und durch eine Hilfskraft in eine Entriegelungsposition verstellt wird, wobei mehrere zweite Riegelelemente (6) miteinander verbunden sind und durch eine gemeinsame Vorrichtung (11) betätigt werden, **dadurch gekennzeichnet, dass** die Aktuatoren (1) in einem rotierenden System eines Hubschraubers angeordnet sind, wobei sie dazu dienen, Rotorblätter des Hubschraubers individuell anzusteuern und dass die zweiten Riegelelemente (6) durch keilförmige Ausnehmungen (12) in einem Verriegelungsring (11) oder einem sternförmigen Element gebildet werden, in die die ersten Riegelelemente (5) beim Verstellen des Verriegelungsrings (11) oder des sternförmigen Elements eingreifen.

2. Einrichtung (3) nach Anspruch 1, **dadurch gekennzeichnet, dass** die Aktuatoren (1) über einen Mischhebel (7) auf das Ansteuersystem der Rotorblätter wirken.

3. Einrichtung (3) nach Anspruch 1 oder 2, **dadurch gekennzeichnet, dass** die ersten Riegelelemente (5) im Bereich der Anlenkachse (8) des Aktuators (1) am Mischhebel (7) mit dem Mischhebel (7) verbunden sind.

4. Einrichtung (3) nach Anspruch 3, **dadurch gekennzeichnet, dass** alle Riegelelemente (5, 6) in einer Ebene angeordnet sind und dass diese gemeinsame Ebene der ersten Riegelelemente (5) und der zweiten Riegelelemente (6) eine Rotationsebene ist.

5. Einrichtung (3) nach einem der vorhergehenden Ansprüche, **dadurch gekennzeichnet, dass** die Entriegelungsposition und die Verriegelungsposition durch Verdrehen des Verriegelungsrings (11) oder des sternförmigen Elements erreicht werden.

6. Einrichtung (6) nach einem der Ansprüche 1 bis 4, **dadurch gekennzeichnet, dass** die Entriegelungsposition und die Verriegelungsposition durch eine axiale Verschiebung des Verriegelungsrings (11) oder des sternförmigen Elements erreicht werden.

7. Einrichtung nach einem der vorhergehenden Ansprüche, **dadurch gekennzeichnet, dass** die ersten oder die zweiten Riegelelemente (5, 6) federnd nachgiebig ausgebildet und in sich vorgespannt sind, um Spiel und Lagetoleranzen der Riegelelemente beim Verriegeln auszugleichen.

8. Einrichtung nach Anspruch 7, **dadurch gekennzeichnet, dass** das erste Riegelelement (5) ein erstes, an den Mischhebel (7) gekoppeltes Keilelement (16) und ein zweites, gegenüber dem ersten gegen die Kraft eines vorgespannten Federelements (18) verschiebliches Keilelement (17) aufweist.

## Claims

1. Device (3) for simultaneously locking a plurality of actuators (1), comprising a first locking element (5), which is associated with each positioning member (2) of an actuator (1) and interacts with a second locking element (6), which is fixed in positioning direction of the positioning member (2) in the housing (4), and is further displaced by spring action into a locking position and by an auxiliary force into an unlocking position, wherein a plurality of second locking elements (6) are connected to one another and operated by means of a common apparatus (11), **characterized in that** the actuators (1) are disposed in a rotating system of a helicopter, wherein they are used for individual control of the rotor blades of the helicopter and that the second locking elements (6) are formed by wedge-shaped recesses (12) in a locking ring (11) or star-shaped element, into which recesses the first locking elements (5) engage upon displacement of the locking ring (11) or star-shaped element.

2. Device (3) according to claim 1, **characterized in that** the actuators (1) act via a mixture control (7) upon the control system of the rotor blades.

3. Device (3) according to claim 1 or 2, **characterized in that** the first locking elements (5) are connected in the region of the articulated axle (8) of the actuator (1) on the mixture control (7) to the mixture control (7).

4. Device (3) according to claim 3, **characterized in that** all of the locking elements (5, 6) are disposed in one plane and that said common plane of the first locking elements (5) and of the second locking elements (6) is a rotational plane.

5. Device (3) according to one of the preceding claims, **characterized in that** the unlocking position and the locking position are reached through rotation of the locking ring (11) or star-shaped element.

6. Device (6) according to one of claims 1 to 4, **characterized in that** the unlocking position and the locking position are reached by means of an axial displacement of the locking ring (11) or star-shaped element.

7. Device according to one of the preceding claims, **characterized in that** the first or the second locking elements (5, 6) are of a resiliently compliant design and are in themselves preloaded in order to compensate clearance and positional tolerances of the locking elements during locking.

8. Device according to claim 7, **characterized in that** the first locking element (5) comprises a first key element (16), which is coupled to the mixture control (7), and a second key element (17), which is displaceable relative to the first key element counter to the action of a preloaded spring element (18).

## Revendications

1. Dispositif (3) pour verrouiller simultanément plusieurs actionneurs (1) ayant un premier élément de verrou (5) associé à chaque vérin (2) d'un actionneur (1) et qui coopère avec un second élément de verrou (6) qui est immobilisé dans un carter (4) dans la direction d'action du vérin (2), qui peut être placé dans une position de verrouillage par une force élastique et dans une position de déverrouillage par une force auxiliaire, plusieurs seconds éléments de verrous (6) étant reliés les uns aux autres et étant actionnés par un dispositif commun (11), **caractérisé en ce que** les actionneurs (1) sont disposés dans un système tournant d'un hélicoptère où ils servent à commander individuellement des pales de rotor de l'hélicoptère, et **en ce que** les seconds éléments de verrous (6) sont formés par des évidements (12) en forme de coin ménagés dans un anneau de verrouillage (11) ou dans un élément en forme d'étoile, évidements dans lesquels les premiers éléments de verrous (5) s'engagent en prise lors du déplacement de l'anneau de verrouillage (11) ou de l'élément en forme d'étoile.

2. Dispositif (3) selon la revendication 1, **caractérisé en ce que** les actionneurs (1) agissent sur le système de commande des pales du rotor par l'intermédiaire d'un levier mélangeur (7).

3. Dispositif (3) selon la revendication 1 ou 2, **caractérisé en ce que** les premiers éléments de verrous (5) sont reliés au levier mélangeur (7) dans la région de l'axe d'articulation (8) de l'actionneur (1) sur le levier mélangeur (7).

4. Dispositif (3) selon la revendication 3, **caractérisé en ce que** tous les éléments de verrous (5, 6) sont disposés dans un même plan et **en ce que** ce plan commun des premiers éléments de verrous (5) et des seconds éléments de verrous (6) est un plan de rotation.

5. Dispositif (3) selon l'une quelconque des revendications précédentes, **caractérisé en ce que** la position de déverrouillage et la position de verrouillage sont atteintes par une rotation de l'anneau de verrouillage (11) ou de l'élément en forme d'étoile.

6. Dispositif (3) selon l'une des revendications 1 à 4, **caractérisé en ce que** la position de déverrouillage et la position de verrouillage sont atteintes par une translation axiale de l'anneau de verrouillage (11) ou de l'élément en forme d'étoile.

7. Dispositif selon l'une des revendications précédentes, **caractérisé en ce que** les premiers ou les seconds éléments de verrous (5, 6) sont configurés pour céder élastiquement et sont précontraints en soi pour compenser le jeu et les tolérances de position des éléments de verrous lors du verrouillage.

8. Dispositif selon la revendication 7, **caractérisé en ce que** le premier élément de verrou (5) est un premier élément en forme de coin (16) accouplé au levier mélangeur (7) et un deuxième élément en forme de coin (17) qui peut se déplacer en translation par rapport au premier à l'encontre de la force d'un élément élastique précontraint (18).
